# EUROPEAN PATENT APPLICATION

(11) **EP 2 373 024 A2**
(43) Date of publication of application: **05.10.2011**
(21) Application number: 11159087.3
(22) Date of filing: 21.03.2011
(51) Int. Cl.: H04N 7/18

(54) **Intelligent camera display based on selective searching**

(30) Priority: 05.04.2010 US 754312
(71) Applicant: Honeywell International, Inc., Morristown NJ 07962-2245 (US)
(72) Inventor: Dhamija, Vijay, 560078, Bangalore, Karnataka (IN); Jackson, Andrew, Las Vegas, NV 89131 (US); Nagasuri, Kartheek, 560076, Bangalore, Karnataka (IN); Drive, Marine, 560076, Bangalore, Karnataka (IN)
(74) Representative: Buckley, Guy Julian

(57) **Abstract**

A system and method for intelligent camera display based on selective searching is provided. The method includes searching a plurality of devices for compliance with a search criteria, and performing an action substantially simultaneously on all devices in the plurality of devices that are in compliance with the search criteria.

## Description

### FIELD OF INVENTION

The present invention relates generally to video management systems and closed circuit television systems used in connection with surveillance systems. More particularly, the present invention relates to systems and methods for searching for a device in a surveillance system and performing an action on all devices found in the search.

### BACKGROUND

Known video management systems (VMS) and closed circuit television (CCTV) systems used in security surveillance can include a plurality of cameras and a workstation. The cameras can be dispersed in a monitored area, and the workstation can display video data streams associated with the plurality of cameras. Each camera can monitor a particular zone in the monitored area, and security personnel or another user at the workstation can view video data streams associated with each camera.

Each of the plurality of cameras can be given a camera name and/or number and have a particular location in the monitored area. A user at the workstation can search for a particular camera or cameras based on any number of search criteria. However, if the user wants to perform an action on any devices found in the search, the user must perform the action on each device individually. For example, if the user wants to show video from all cameras found in the search, the user must individually select each camera for viewing.

In video management systems or CCTV systems used in large scale surveillance systems such as a casino or airport, there can be a large number of cameras dispersed in the monitored area. Thus, it can be a tedious, time consuming, and cumbersome task for a user to configure or perform an action on each camera individually. Specifically, when an alarm condition has been detected, time is of the essence, and individually configuring each camera can cause unacceptable delays.

Furthermore, when cameras are added to, deleted from, or relocated in a surveillance system, users must re-learn the camera names, numbers, and location to view video associated with the cameras or to perform other actions on the cameras. Current solutions for accessing cameras in a large scale surveillance system include accessing a table or other cross-referencing device to determine the name, number, and/or location of a camera monitoring a particular zone. However, when time is of the essence during an alarm condition, use of such cross-referencing devices can cause unacceptable delays.

There is thus a continuing, ongoing needs for systems and methods for searching devices in a surveillance system and performing an action on all devices found in the search. Preferably, the desired action can be performed on all devices found in the search substantially simultaneously.

### BRIEF DESCRIPTION OF THE DRAWINGS

FIG. 1 is a flow diagram of a method for searching devices in a surveillance system and performing an action on all devices found in the search in accordance with the present invention;

FIG. 2 is a block diagram of a system for carrying out methods in accordance with the present invention; and

FIG. 3 an interactive window displayed on a viewing screen of a graphical user interface for searching devices in a surveillance system and performing an action on all devices found in the search in accordance with the present invention.

### DESCRIPTION OF THE PREFERRED EMBODIMENTS

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments of the present invention include systems and methods for searching devices in a surveillance system and performing an action on all devices found in the search. Preferably, the desired action can be performed on all devices found in the search substantially simultaneously.

Systems and methods in accordance with the present invention can include a workstation for displaying video data streams associated with cameras and other devices in a surveillance system. The workstation in accordance with the present invention can include control circuitry, a programmable processor, and associated software, stored on a local computer readable medium, as would be understood by those of skill in the art.

In embodiments of the present invention, a user can search all devices in the surveillance system based on any number of search criteria. For example, if a user wishes to identify all cameras in a surveillance system monitoring a particular area of a building, for example, the lobby of a building, he can input "Lobby," for example, into the workstation as a search term. Then, systems and methods of the present invention can search all cameras in the surveillance system and output a result list of all cameras monitoring the lobby area.

When presented with a result list from a search, a user can input any number of desired actions to be performed on all devices in the result list. For example, the user can select an action to be performed from a drop down menu of actions on the workstation. Alternatively, the user can define a custom action to be performed on all devices in the result list. Systems and methods of the present invention can create and save custom actions for future use to be presented in future drop down menus.

For example, if the user wishes to view all video data streams associated with cameras in the result list, he can select "View All," for example, from a drop down menu. Then, systems and methods of the present invention can display to the user video data streams associated with all cameras in the result list. For example, the workstation can display the video data streams associated with the cameras in the result list.

The number of video data streams that can be displayed by the workstation at any given time may be restricted by the size of the workstation and any associated viewing monitor. However, all video data streams can be synched, and a user can browse through the selected video data streams. For example, the workstation can include an interactive viewing screen with "Next" and "Previous" buttons and/or icons that can be selected to display the next or previous video data streams associated with the next or previous cameras in the result list.

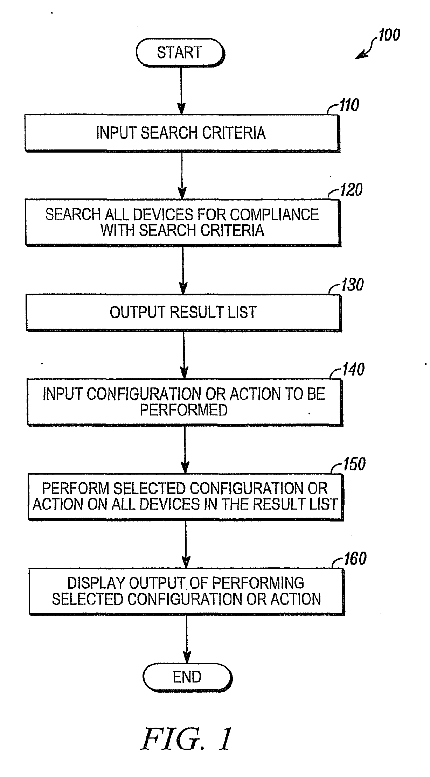

FIG. 1 is a flow diagram of a method 100 for searching devices in a surveillance system and performing an action on all devices found in the search in accordance with the present invention. In the method 100, a search term can be input by, for example, security personnel or another user as in 110. Then, all devices in a surveillance system can be searched for compliance with the search term as in 120.

A result list of all devices in the surveillance system that comply with the search term can be output as in 130. Then, a configuration or action can be input or selected by, for example, security personnel or another user as in 140. The selected action can be performed on all devices in the result list as in 150, and the output of performing the selected action can be displayed to a user as in 160.

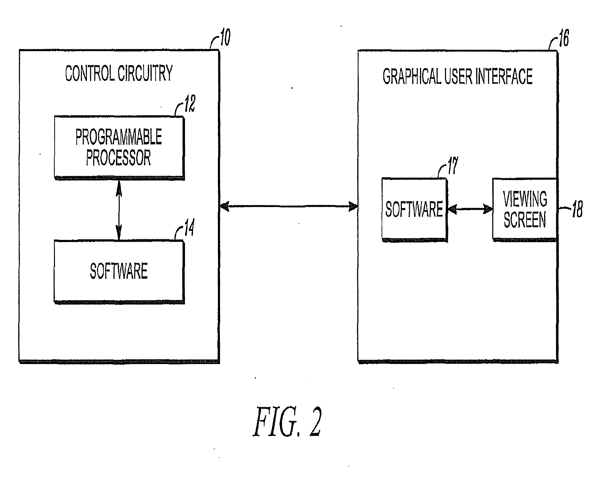

The method shown in FIG. 1 and others in accordance with the present invention can be implemented with a programmable processor and associated control circuitry. As seen in FIG. 2, control circuitry 10 can include a programmable processor 12 and software 14, stored on a local computer readable medium, as would be understood by those of skill in the art. Names, numbers, and/or location data for the plurality of cameras located in a monitored area can be input into the programmable processor and associated control circuitry.

An associated user interface 16 can be in communication with the processor 12 and circuitry 10. A viewing screen 18 of the user interface, as would be known by those of skill in the art, can display interactive and viewing windows. In some embodiments of the present invention, the user interface can be a multi-dimensional graphical user interface. In some embodiments of the present invention, the viewing screen 18 can display video from the cameras in the monitored area.

The interactive and viewing windows shown and described herein are exemplary only. Those of skill in the art will understand that the features of the windows shown and described herein may be displayed by additional or alternate windows.

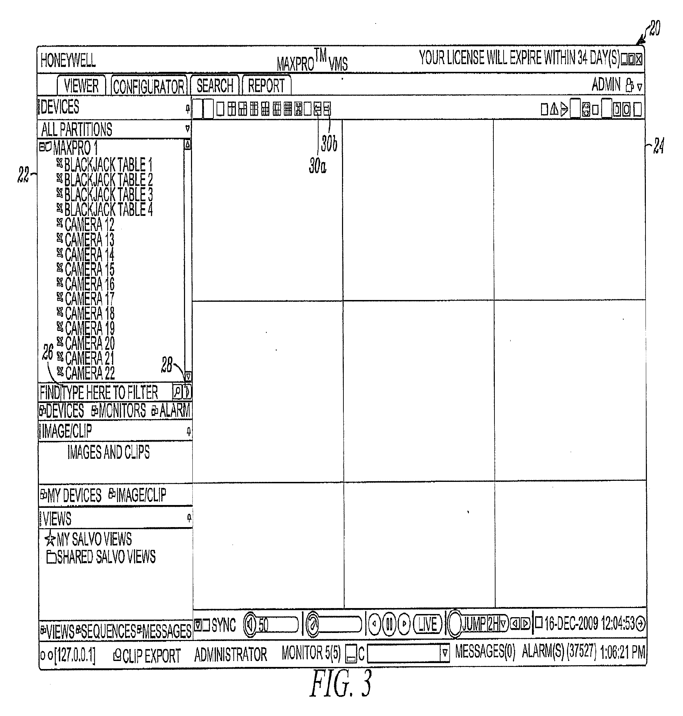

FIG. 3 is an interactive window 20 displayed on a viewing screen of a graphical user interface for searching devices in a surveillance system and performing an action on all devices found in the search in accordance with the present invention. As seen in FIG. 3, the window 20 can include a left pane 22 and a right viewing pane 22.

The left pane 22 can include a plurality of tabs for different types of devices in the surveillance system. For example, the left pane 22 can include one tab for cameras, one tab for monitors, and one tab for alarms. Each tab can include a list of devices for that tab, a search criteria input, and an actions menu. The actions menu for each tab can include options appropriate and relevant for the device associated with the particular tab.

For example, as seen in FIG. 3, the left pane 22 includes three separate tabs: Devices, Monitors, and Alarm. Under the Devices tab, the left pane 22 includes a list of devices, e.g. Black Jack Table 1, Black Jack Table 2, Black Jack Table 3, Black Jack Table 4, Camera 12, Camera 13, etc. The left pane 22 also includes a search input 26 and an actions menu 28. The search input 26 can be, for example a text box, for receiving inputted search criteria. The actions menu 28 can be, for example, a drop down menu with a list of actions that can be performed on devices listed in the relevant tab.

The actions menu 28 can include options such as, for example Show All, Show Surrounding Cameras, Send All Cameras to a Particular Pre-Shot, or Send All Cameras to a Home Position. In embodiments of the present invention, a user can dynamically add a custom action to the actions menu 28. Custom actions created by the user can be added to the actions menu 28 for future use.

The window 20 can also include first and second buttons or icons 30a, 30b. For example, the first selection button 36a can be a "Previous" button, and the second selection button 36b can be a "Next" button. The video data streams associated with devices in the result list can be easily and efficiently browsed by engaging the first and second selection buttons 36a, 36b.

When a user enters search criteria into the search input 26, the devices associated with the opened tab can be searched for compliance with the search criteria. In embodiments of the present invention, a result list of devices in compliance with the search criteria can be displayed in the window 20. In further embodiments of the present invention, the result list from a search can be saved for reuse in the future.

When a user enters an action to be performed from the actions menu 28, the action can be performed substantially simultaneously on all devices in the result list. For example, if the result list contains N number of cameras, then the user can select an action to display video data streams associated with all N cameras in the result list (e.g. Show All). Then all video can be shown substantially simultaneously in the right viewing pane 24 of the window 20. For example, the right viewing pane 24 can be divided into N sub-panels such that each sub-panel displays video from one camera.

However, the number of video data streams that can be displayed by the right viewing pane 24 at any given time may be restricted by the size restrictions of the viewing pane 24. For example, if the result list contains 100 cameras, depending on the size of the window 20, the right viewing pane 24 may not be able to display all video at the same time. In such circumstances, the video data streams associated with all cameras in the result list can be synched, and a user can browse through the selected video data streams using, for example, the first and second selection buttons 30a, 30b.

From the foregoing, it will be observed that numerous variations and modifications may be effected without departing from the spirit and scope of the invention. It is to be understood that no limitation with respect to the specific system or method illustrated herein is intended or should be inferred. It is, of course, intended to cover by the appended claims all such modifications as fall within the sprit and scope of the claims.

## Claims

1. A method comprising:
searching a plurality of devices for compliance with a search criteria; and
performing an action substantially simultaneously on all devices in the plurality of devices that are in compliance with the search criteria.

2. The method of claim 1 further comprising inputting the search criteria.

3. The method of claim 2 wherein inputting the search criteria includes typing the search criteria in a text box.

4. The method of claim 1 further comprising displaying a result list including all devices in the plurality of devices that are in compliance with the search criteria.

5. The method of claim 1 further comprising selecting the action to be performed on all devices in the plurality of devices that are in compliance with the search criteria.

6. The method of claim 5 wherein selecting the action to be performed includes selecting the action from a drop down menu of actions.

7. The method of claim 5 wherein selecting the action to be performed includes defining a custom action to be performed on all devices in the plurality of devices that are in compliance with the search criteria.

8. The method of claim 1 further comprising displaying an output result from performing the action.

9. The method of claim 1 wherein performing the action substantially simultaneously includes displaying video data streams associated with all devices in the plurality of devices that are in compliance with the search criteria.

10. The method of claim 9 wherein displaying the video data streams includes browsing through video data streams associated with all devices in the plurality of devices that are in compliance with the search criteria.

11. The method of claim 1 further comprising dividing the plurality of devices into groups according to the type of device.

12. An apparatus comprising:
circuitry that searches a plurality of devices for compliance with a search criteria; and
circuitry that performs an action substantially simultaneously on all devices in the plurality of devices that are in compliance with the search criteria.

13. The apparatus of claim 12 further comprising circuitry that displays a result list including all devices in the plurality of devices that are in compliance with the search criteria.

14. The apparatus of claim 12 further comprising circuitry that accepts a custom action defined by a user.

15. The apparatus of claim 12 further comprising circuitry that displays an output result of performing the action.
